# EUROPÄISCHE PATENTANMELDUNG

(11) **EP 0 595 079 A1**
(43) Veröffentlichungstag der Anmeldung: **04.05.1994**
(21) Anmeldenummer: 93116138.4
(22) Anmeldetag: 06.10.1993
(51) Int. Cl.: A62D 3/00, B01D 53/34

(54) **Verfahren zur Umsetzung von FCKW's mit Dispersionen von Alkalimetallen**

(30) Priorität: 28.10.1992 DE 4236382
(71) Anmelder: Degussa Aktiengesellschaft, D-60311 Frankfurt (DE)
(72) Erfinder: Parr, Sybille, D-63579 Freigericht (DE); Popp, Klaus, D-63579 Freigericht (DE)

(57) **Zusammenfassung**

Die Erfindung betrifft ein Verfahren zur Umsetzung von insbesondere Fluor und Chlor enthaltenden Kohlenwasserstoffen (FCKW) mit Alkalimetalldispersionen, bei dem die entsprechenden anorganischen Halogenide entstehen.

## Beschreibung

Die Erfindung betrifft ein Verfahren zur Umsetzung von insbesondere Fluor und Chlor enthaltenden Kohlenwasserstoffen (FCKW) mit Alkalimetalldispersionen, bei dem die entsprechenden anorganischen Halogenide entstehen.

Seit bekannt ist, daß die gasförmigen halogenierten Kohlenwasserstoffe die schützende Ozonschicht in der hohen Erdatmosphäre zerstören, wird nach Möglichkeiten gesucht, diese Stoffe umweltfreundlich umzusetzen oder zu zerstören.

Das zur Zeit am meisten angewendete Verfahren ist die Verbrennung bei hohen Temperaturen. Dabei müssen jedoch einige Nachteile in Kauf genommen werden. Die thermische Zerstörung erfordert einen hohen Energiebedarf, da die meisten FCKW's nur einen geringen Warmeinhalt besitzen oder gar unbrennbar (Halogene) sind. Bei der thermischen Zerstörung entstehen zudem eine Reihe von Schadgasen (HCl, HF, HBr, NOₓ), die nur durch aufwendige Gaswäschen abgetrennt werden können. Darüber hinaus muß sichergestellt werden, daß genügend Wasserstoff vorhanden ist, um den gesamten Chlor- bzw. Fluorgehalt in die entsprechenden Halogenwasserstoffe zu überführen. Diese Verbindungen verursachen außerdem Werkstoffprobleme, so daß für die Konstruktion der Aggregate besonders widerstandsfähiges Material benötigt wird.

Es wurde auch vorgeschlagen, eine gesteuerte Krackung der FCKW's bei 2.000° C durchzuführen (EP-B- 0 212 410), um wieder einsetzbare Produkte (Salzsäure und Flußsäure) zu gewinnen. Abgesehen von dem hohen Energieeinsatz und den notwendigen speziellen Werkstoffen für die Apparatur eignet sich dieses Verfahren nur für FCKW-Produkte, die frei von Verunreinigungen sind. Darüber hinaus muß ein bestimmtes Mischungsverhältnis der Gase eingehalten werden, um eine praktikable Fahrweise zu gewährleisten.

In der DE-OS 40 22 526 wird vorgeschlagen, gasförmige oder gelöste Organohalogenverbindungen mit auf einem festen Träger verteilten Alkalimetall in Kontakt zu bringen und umzusetzen. Dabei wird jedoch eine schwer kontrollierbare Reaktion in Gang gesetzt, bei der die Gefahr besteht, daß teilabgebaute Zwischenprodukte die aktive Oberfläche des Alkalimetalls belegen und die Reaktivität schnell erschöpfen. Außerdem entstehen große Mengen an zu entsorgendem Abfall, der noch merkliche Mengen des Alkalimetalls enthält.

Aufgabe der Erfindung ist es, ein praktikables Verfahren zur Verfügung zu stellen, das den praktisch quantitativen Abbau der Fluor- und Chloranteile aus FCKW's zu anorganischem Fluorid und Chlorid gewährleistet.

Gegenstand der Erfindung ist ein Verfahren zur Umsetzung von insbesondere Fluor- und Chlor enthaltenden Kohlenwasserstoffen (FCKW), dadurch gekennzeichnet, daß man das Behandlungsgut unter einer Inertgasatmosphäre, wie z. B. Stickstoff oder Argon, bei Temperaturen von 100 bis 200° C, bevorzugt von 150 bis 190° C, in intensiv gerührte Dispersionen eines Alkalimetalls, insbesondere Natrium, in einem inerten Lösungsmittel einleitet, wobei sich das Molverhältnis von Alkalimetall zu abzubauendem Halogen mindestens auf 1 : 1 beläuft.

Eventuell überschüssiges Alkalimetall wird nach der Umsetzung mit Wasser zerstört und der sich bildende Wasserstoff mit dem Inertgas abgeleitet. Das gleichzeitig entstehende Natriumhydroxid wird mit der anorganischen Phase abgetrennt.

Das während der sofort erfolgenden Umsetzung entstehende anorganische Halogenid wird nach der Reaktion abgetrennt, wenn das Verfahren batchweise betrieben wird.

Die kontinuierliche Fahrweise liegt jedoch auch im Wissensbereich des technisch versierten Fachmanns.

Bevorzugt eingesetzt werden Dispersionen in Weißöl, insbesondere mit einer Konzentration von 5 bis 30 Gew.-% Natrium, bevorzugt von 5 bis 25 Gew.-%.

Liegt das Molverhältnis zwischen abzubauenden Halogensubstituenten und Alkalimetall unterhalb von 1 : 1, ist eine vollständige Enthalogenierung nicht zu erwarten.

In Abhängigkeit vom Fluorgehalt der zu enthalogenisierenden Verbindung wird jedoch empfohlen, den Alkaligehalt je nach Fluoratom im FCKW-Molekül um 1 bis 25 % höher als das Verhältnis 1 : 1 zu wählen.

Als FCKW im Sinne dieser Erfindung werden u. a. folgende Verbindungen behandelt:

| | | | Sdp. |
|---|---|---|---|
| F 11 | Trichlormonofluormethan | CCl₃F | + 23,7° C |
| F 12 | Dichlordifluormethan | CCl₂F₂ | - 29,8° C |
| F 113 | Trifluortrichlorethan | C₂Cl₃F₃ | + 47,6° C |
| F 22 | Monochlordifluormethan | CHClF₂ | - 40,8° C |
| F 114 | Dichlortetrafluorethan | C₂Cl₂F₄ | + 3,6° C |
| F 142 b | Chlordifluorethan | CH₃-CClF₂ | - 9,4° C |
| F 152 A | Difluorethan | CH₃-CHF₂ | - 24,0° C |
| C 318 | Octafluorcylobutan | C₄F₈ | + 6,1° C |
| F 13 | Chlortrifluormethan | CClF₃ | - 81,4° C |
| R 13 B1 | Bromtrifluormethan | CBrF₃ | - 57,8° C |
| F 115 | Chlorpentafluorethan | C₂ClF₅ | - 38,0° C |

Die zu behandelnden Verbindungen können in einem weiteren Konzentrationsbereich in die Dispersion eingeleitet werden, d. h. es sind bei den üblicherweise anfallenden Verbindungen, sei es, daß sie in reiner Form oder mit anderen Verbindungen (Gasen oder Flüssigkeiten) vermischt vorliegen, keine Verdünnungs- oder Anreicherungsschritte notwendig.

Vorteilhaft werden die abzubauenden Verbindungen bzw. sie enthaltende Gemische gasförmig so in die Dispersion eingeleitet, daß eine feine Verteilung gewährleistet ist.

Sollte ein nicht umgesetzter Anteil aus der Dispersion austreten, kann er ohne Schwierigkeiten wieder zurückgeführt werden.

Als Abbauprodukt entstehen anorganische Halogenide, die leicht abzutrennen sind.

Insgesamt gesehen erfordert eine Anlage für die Durchführung des erfindungsgemäßen Verfahrens keinen hohen Kapitalaufwand. Relativ kleine Anlagen können in Containerbauweise für einen mobilen Einsatz gebaut werden.

Am Beispiel von Dichlordifluormethan (F12) soll der Verfahrensgang erläutert werden.

### Beispiel 1

In einem Reaktionsgefäß versehen mit Rückflußkühler, schnellaufendem Rührer und verschiedenen Zuleitungsstutzen wird eine Natriumdispersion in Weißöl von 13 % vorgelegt. Unter Rühren und Argonspülung wird die Mischung auf 180° C aufgeheizt.

Dann werden insgesamt 18,3 g F12 in 28 Minuten zugeführt (Molverhältnis Na zu Halogen 1 : 0,83). Nach weiteren 15 Minuten Nachreaktionszeit wurde das Gemisch abgekühlt und der Rückstand auf anorganische Halogenide untersucht. Es wurden 99 % des im FCKW enthaltenen Chlors und 100 % des dort enthaltenen Fluors wiedergefunden.

### Beispiel 2

Durchführung wie Beispiel 1, aber mit einem Molverhältnis Na zu Halogen von 1 : 1. Es wurden 100 % des im FCKW enthaltenen Chlors und 93 % des dort enthaltenen Fluors als Na-Halogenid wiedergefunden.

## Patentansprüche

1. Verfahren zur Umsetzung von insbesondere Fluor und Chlor enthaltenden Kohlenwasserstoffen (FCKW) mit Alkalimetallen, wobei sich das Molverhältnis von Alkalimetall zu abzubauendem Halogen mindestens auf 1 : 1 beläuft, und das entstandene anorganische Halogenid anschließend abtrennt,
**dadurch gekennzeichnet**,
daß man das gasförmige Behandlungsgut in feinverteilter Form unter einer Inertgasatmosphäre bei Temperaturen von 100 bis 200° C in intensiv gerührte Dispersionen eines Alkalimetalls in einem inerten Lösungsmittel einleitet.

2. Verfahren gemäß Anspruch 1,
**dadurch gekennzeichnet**,
daß man eine 5 bis 30 Gew.-%ige Dispersion von Natrium in Weißöl einsetzt.

3. Verfahren gemäß einem oder mehreren der Ansprüche 1 bis 2,
**dadurch gekennzeichnet**,
daß man das Behandlungsgut im Gemisch mit anderen Verbindungen einleitet.

4. Verfahren gemäß einem oder mehreren der Ansprüche 1 bis 3,
**dadurch gekennzeichnet**,
daß man als FCKW's folgende Verbindungen einsetzt:
| | | |
|---|---|---|
| F 11 | Trichlormonofluormethan | CCl₃F |
| F 12 | Dichlordifluormethan | CCl₂F₂ |
| F 113 | Trifluortrichlorethan | C₂Cl₃F₃ |
| F 22 | Monochlordifluormethan | CHClF₂ |
| F 114 | Dichlortetrafluorethan | C₂Cl₂F₄ |
| F 142 b | Chlordifluorethan | CH₃-CClF₂ |
| F 152 A | Difluorethan | CH₃-CHF₂ |
| C 318 | Octafluorcylobutan | C₄F₈ |
| F 13 | Chlortrifluormethan | CClF₃ |
| R 13 B1 | Bromtrifluormethan | CBrF₃ |
| F 115 | Chlorpentafluorethan | C₂ClF₅ |
